# FASCICULE DE BREVET EUROPEEN

(11) **EP 2 937 575 B1**
(45) Date de publication et mention de la délivrance du brevet: **25.01.2017**
(21) Numéro de dépôt: 15164237.8
(22) Date de dépôt: 20.04.2015
(51) Int. Cl.: F16B 1/00, F16B 21/08

(54) **DISPOSITIF DE FIXATION PAR CRAMPONNAGE**
VORRICHTUNG ZUM BEFESTIGEN DURCH VERKLAMMERUNG
DEVICE FOR ATTACHMENT BY STAPLING

(30) Priorité: 22.04.2014 FR 1453602
(43) Date de publication de la demande: 28.10.2015
(73) Titulaire: A. RAYMOND ET CIE, 38000 Grenoble (FR)
(72) Inventeur: Maschat, Kevin, 79618 Rheinfelden (DE); Binkert, Sven, 79540 Lorrach (DE)
(74) Mandataire: Prugneau, Philippe

(56) Documents cités:
- EP-A1- 2 687 731
- DE-A1-102004 025 698

## Description

### Domaine technique

Le domaine de l'invention est celui de l'assemblage par agrafage de composants structuraux.

L'invention concerne plus particulièrement un dispositif de fixation pour assembler une pièce à une partie de support, comprenant une agrafe de fixation incluant une tête et un élément d'accrochage déformable qui s'étend sous la tête suivant une certaine direction axiale et qui définit une face de cramponnage espacée de la tête suivant ladite direction axiale, cet élément d'accrochage étant destiné à être poussé à travers la pièce et la partie de support de façon à réaliser l'assemblage par cramponnage de la pièce et de la partie de support entre la tête et la face de cramponnage de l'agrafe, ledit élément d'accrochage étant conçu de telle manière que ladite face de cramponnage se rétracte élastiquement vers l'intérieur de l'agrafe transversalement à ladite direction axiale quand l'élément d'accrochage est poussé à travers la pièce et la partie de support jusqu'à ce que l'agrafe soit enfoncée complètement à travers la pièce et la partie de support, la face de cramponnage revenant élastiquement à l'extérieur de l'agrafe pour occuper une position de cramponnage sur la partie de support dès que l'élément d'accrochage se trouve dans ladite position d'enfoncement complet.

### Technique antérieure

Un tel dispositif de fixation est connu du document de brevet DE-10 2011 010 141. Ce dispositif de fixation par agrafage connu est conformé suivant un profilé en forme de U pour présenté une grande rigidité et assurer une haute tenue mécanique contre l'arrachement.

Il est bien adapté pour l'assemblage d'un sac de sécurité gonflable sur un volant de véhicule automobile.

Dans l'industrie automobile, les dispositifs de fixation par agrafage remplacent de plus en plus les systèmes d'assemblage par vis et écrou.

Dans le cas des fixations par agrafage où le problème de la sécurité est important, comme par exemple la fixation d'un sac de sécurité gonflable sur un composant fixe d'un véhicule automobile, il est toutefois indispensable de s'assurer que la qualité de la fixation est effectivement conforme aux exigences qui s'imposent en matière de résistance mécanique.

Dans le cas des dispositifs de fixation par agrafage, il n'est cependant pas souvent simple de se rendre compte si la liaison de raccordement est réalisée correctement ou si elle est, par exemple, restée dans un état de semi-verrouillage.

Cette constatation est, dans de nombreux cas, par exemple lors du montage d'un sac de sécurité gonflable sur un volant, rendue encore plus difficile par le fait que l'on ne peut que très difficilement vérifier, par une observation visuelle, l'état des dispositifs de fixation par agrafage.

On connaît encore par le document de brevet DE-10 2004 025 698, un dispositif de fixation par agrafage de deux éléments structuraux qui se compose d'un élément d'agrafage qui peut prendre une position de poussée en prise d'engagement et une position d'accrochage par cramponnage, et d'un témoin de contrôle de bon montage, dans lequel l'élément d'accrochage et le témoin de contrôle de bon montage sont accouplés l'un à l'autre dans la position de poussée en prise d'engagement et agencés de telle façon qu'un déplacement du témoin de contrôle de bon montage, par rapport à l'élément d'accrochage, dans la direction de contrôle, n'est possible que si l'élément d'accrochage se trouve dans sa position d'accrochage par cramponnage.

On peut ainsi s'assurer si l'assemblage des éléments structuraux est correctement réalisé simplement en essayant de déplacer le témoin de contrôle de bon montage dans la direction de contrôle. Si un tel déplacement est possible, cela signifie que l'assemblage des éléments structuraux est correctement réalisé. Si ce déplacement n'est pas possible, cela signifie que l'élément d'accrochage n'est pas correctement enfoncé dans les éléments structuraux et que donc il n'est pas en position d'accrochage par cramponnage.

Le document EP 2 687 731 présente un autre dispositif de fixation par agrafage de deux éléments structuraux avec un témoin de bon montage.

### Résumé de l'invention

Le but de l'invention est de fournir un dispositif de fixation présentant une grande rigidité et une haute tenue mécanique contre l'arrachement tel que présenté ci-dessus et qui comprend un témoin de contrôle de bon montage pouvant être robuste et permettant un contrôle fiable de la position d'accrochage par cramponnage.

A cet effet, l'invention a pour objet un dispositif de fixation pour assembler une pièce à une partie de support, comprenant une agrafe de fixation incluant une tête et un élément d'accrochage déformable qui s'étend sous la tête suivant une certaine direction axiale et qui définit une face de cramponnage espacée de la tête suivant ladite direction axiale, cet élément d'accrochage étant destiné à être poussé à travers la pièce et la partie de support de façon à réaliser l'assemblage par cramponnage de la pièce et de la partie de support entre la tête et la face de cramponnage de l'agrafe, ledit élément d'accrochage étant conçu de telle manière que ladite face de cramponnage se rétracte élastiquement vers l'intérieur de l'agrafe transversalement à ladite direction axiale quand l'élément d'accrochage est poussé à travers la pièce et la partie de support jusqu'à ce que l'agrafe soit enfoncée complètement à travers la partie de support, la face de cramponnage revenant élastiquement à l'extérieur de l'agrafe pour occuper une position de cramponnage sur la partie de support dès que l'élément d'accrochage se trouve dans ladite position d'enfoncement complet, caractérisé en ce qu'il comprend en outre un témoin de contrôle de bon montage de l'agrafe en position de cramponnage qui se présente comme une sorte de tige destinée à être poussée axialement dans l'agrafe, en ce que ledit témoin et ladite agrafe sont conçus de telle manière que, quand l'élément d'accrochage est poussé à travers la partie de support, le témoin est empêché de s'enfoncer axialement dans l'agrafe par une butée sur l'élément d'accrochage et en même temps le témoin est contraint à se rétracter élastiquement transversalement à ladite direction axiale vers l'intérieur de l'agrafe sous l'effet de la rétraction de la face de cramponnage vers l'intérieur de l'agrafe, l'enfoncement axial complet du témoin dans l'agrafe n'étant possible qu'au moment où la surface de cramponnage de l'élément d'accrochage revient complètement dans sa position de cramponnage par derrière la partie de support, la butée sur l'élément d'accrochage s'effaçant pour laisser passer le témoin suivant ladite direction axiale.

Avec cet agencement, le témoin de contrôle de bon montage ne peut commencer à se déplacer dans la position de contrôle qu'à la double condition que l'élément d'accrochage ait d'abord été rétracté sous l'effet de l'enfoncement de l'agrafe dans la pièce de support et que la partie de support soit toujours présente entre la tête de l'agrafe et la face de cramponnage lorsque l'élément d'accrochage est revenu dans sa position de cramponnage.

Le dispositif de fixation selon l'invention peut présenter les particularités suivantes :
- le témoin est en matière plastique et l'agrafe est en métal;
- le témoin a une tête qui est conçue pour constituer un repère visuel ou tactile, par exemple qui est conçue pour se déformer au contact de la tête de l'agrafe, quand le témoin est complètement enfoncé dans l'agrafe;
- la tête déformable du témoin comprend une partie rabattable agencée pour pivoter quand le témoin est complètement enfoncé dans l'agrafe;
- vue de dessus, la tête de l'agrafe est cachée au moins en partie par la tête déformable du témoin quand le témoin est complètement enfoncé dans l'agrafe;
- vue de dessus la tête déformable du témoin découvre au moins en partie la tête de l'agrafe quand le témoin est complètement enfoncé dans l'agrafe;
- la tête de l'agrafe se présente sous forme d'une plaque de recouvrement à partir de laquelle s'étendent perpendiculairement deux bras d'accrochage constituant l'élément d'accrochage de l'agrafe et formant avec la plaque de recouvrement un profilé en U, chaque bras d'accrochage étant cintré à l'intérieur du profilé en U et présentant une extrémité libre formant une face de cramponnage qui saille à l'extérieur du profilé en U, en ce que le témoin comporte au moins deux pattes de verrouillage flexibles qui s'étendent suivant la direction axiale entre lesdits bras d'accrochage, en ce que lesdites pattes de verrouillage sont espacées l'une de l'autre transversalement à la direction axiale et présentant chacune un talon et une semelle, et en ce que le talon de chaque patte de verrouillage est conçu pour s'encliqueter dans une fente s'étendant suivant la direction axiale dans l'élément d'accrochage tandis que la semelle de chaque patte de verrouillage est conçue pour venir en butée axiale contre un bras d'accrochage.

On comprend donc qu'avec cet agencement, la position de cramponnage permet aux bras d'accrochage de l'agrafe de revenir élastiquement à l'extérieur de l'agrafe de sorte que les bras d'accrochage ne sont pas contraints lorsqu'il y a cramponnage. On a donc une même position des bras d'accrochage de l'agrafe avant et après cramponnage. La seule contrainte qui s'exerce sur l'agrafe après cramponnage est celle qui s'exerce sur les doigts flexibles qui fléchissent pour maintenir serrées la pièce et la partie de support en position de cramponnage.

Avec l'agencement de l'agrafe selon l'invention, on peut encore dégager l'agrafe de la partie de support avant enfoncement complet de l'agrafe dans la partie support sans risque que le témoin de contrôle de bon montage ne commence à s'enfoncer plus qu'il n'est possible en position de pré-montage dans l'élément d'accrochage et par ailleurs, on peut réaliser un pré-montage du témoin de contrôle de bon montage dans l'agrafe sans risque que le témoin de contrôle de bon montage ne se dégage facilement de l'agrafe.

En cas de retrait de l'agrafe de la partie de support avant enfoncement complet de l'agrafe dans la partie support, le témoin de contrôle de bon montage est dans une position intermédiaire selon laquelle les pattes flexibles du témoin se sont rapprochées l'une de l'autre et les pattes flexibles du témoin peuvent s'écarter à nouveau sans toutefois pouvoir être poussées dans l'agrafe car ce sont les faces de cramponnage de l'agrafe qui contrôlent l'écartement des pattes flexibles du témoin et non pas la bordure de l'ouverture dans la pièce support ce qui contribue à l'obtention d'une bonne fiabilité du témoin de contrôle de bon montage.

Dans le cas où le témoin est enfoncé, ou partiellement enfoncé dans l'agrafe, alors se peut qu'il ne soit pas possible de ressortir l'agrafe de la partie de support sans d'abord tirer manuellement le témoin de bon montage vers l'extérieure de l'agrafe.

Le dispositif de fixation selon l'invention est bien adapté pour la liaison par assemblage d'un sac de sécurité gonflable et d'un composant fixe d'un véhicule automobile, comme un volant, un tableau de bord ou un cadre de pavillon.

Le dispositif de fixation selon l'invention peut être utilisé pour la fixation par assemblage d'autres éléments dans un véhicule automobile comme un pare-soleil, une pognée de portière, une garniture de porte, etc...

### Présentation sommaire des dessins

La figure 1 est une vue en perspective d'un exemple de réalisation de l'agrafe du dispositif de fixation selon l'invention.
La figure 2 est une vue en perspective d'un exemple de réalisation du témoin de contrôle de bon montage spécialement adapté pour s'insérer dans l'agrafe du dispositif de fixation montrée sur la figure 1.
La figure 3 montre suivant une vue en coupe longitudinale le témoin de contrôle de bon montage montré à la figure 2, lorsqu'il est enfoncé partiellement en position de pré-montage dans l'agrafe montrée sur la figure 1.
La figure 4 est une vue en perspective du dispositif de fixation selon l'invention dans un état de pré-montage selon lequel l'agrafe est enfoncée seulement dans la pièce à assembler et le témoin de contrôle de bon montage est enfoncé partiellement en position de pré-montage dans l'agrafe.
La figure 5 montre suivant une vue en coupe longitudinale le témoin de contrôle de bon montage enfoncé partiellement en position de pré-montage dans l'agrafe et qui se rétracte sous l'effet de la rétractation de l'élément d'accrochage de l'agrafe alors que celle-ci est enfoncée partiellement dans la partie de support.
La figure 6 est une vue agrandie en coupe longitudinale qui montre la position relative du témoin de contrôle de bon montage et de l'agrafe juste avant le relâchement élastique de l'élément d'accrochage de l'agrafe.
La figure 7 montre suivant une vue en coupe longitudinale l'élément d'accrochage qui est dans sa position de cramponnage après le relâchement élastique alors que les pattes flexibles du témoin de contrôle bon montage sont maintenues rétractées vers l'intérieur de l'agrafe par contact avec la partie de support.
La figure 8 est une vue agrandie en coupe longitudinale qui montre le témoin de contrôle de bon montage qui est maintenant complètement inséré dans l'agrafe.
Les figures 9 et 10 illustrent respectivement deux formes différentes que peut présenter la tête déformable du témoin de contrôle de bon montage pour signaler que la liaison de raccordement est effectuée correctement.
Les figures 11 et 12 illustrent respectivement encore deux autres formes différentes que peut présenter la tête déformable du témoin de contrôle de bon montage pour signaler que la liaison de raccordement est effectuée correctement.
Les figures 13 et 14 illustrent respectivement encore deux autres formes différentes de la tête du témoin de contrôle de bon montage.

### Description des modes de réalisation

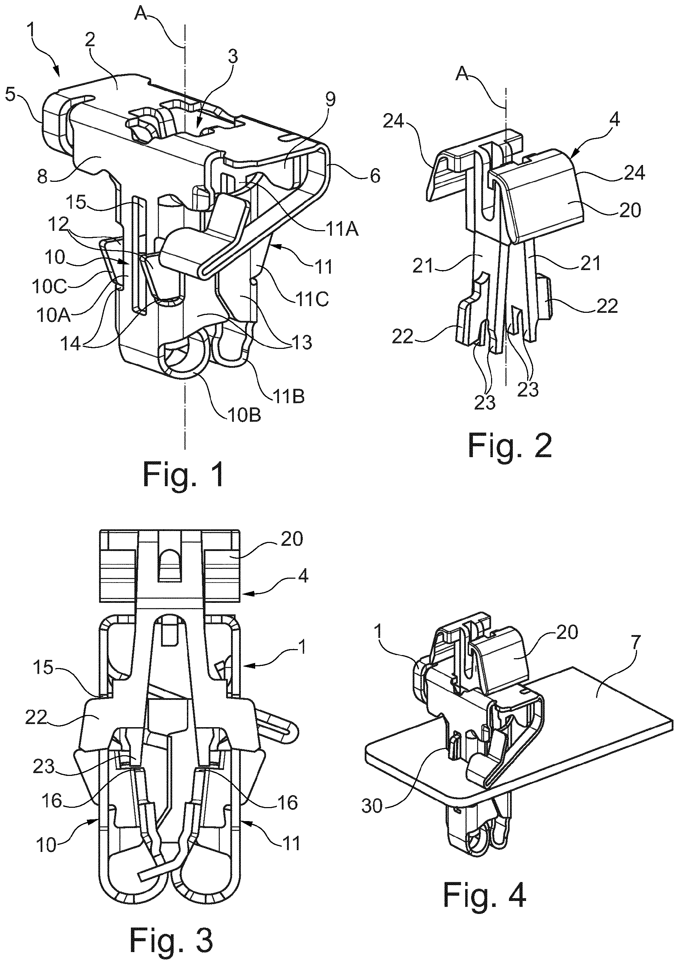

Sur la figure 1, on a illustré un exemple de réalisation du dispositif de fixation selon l'invention avec une agrafe 1 réalisée ici par pliage à partir d'une feuille métallique.

L'agrafe 1 a une tête qui se présente sous la forme d'une plaque de recouvrement 2 ici de forme essentiellement rectangulaire.

La plaque de recouvrement 2 présente une ouverture centrale 3 à travers laquelle le témoin de contrôle de bon montage 4 montré sur la figure 2 est destiné à s'insérer.

La plaque de recouvrement 2 est prolongée à deux extrémités opposées par deux doigts flexibles 5 et 6 qui sont recourbés sous le plan de la plaque de recouvrement 2 en s'écartant de la tête de l'agrafe pour servir de face d'appui, cette face d'appui étant opposée à la face de cramponnage de l'agrafe.

Dans l'exemple de la figure 1, les deux doigts 5 et 6 sont alignés et s'étendent en sens opposés sur deux côtés opposés de la plaque de recouvrement.

Deux parois latérales extérieures 8 et 9 s'étendent depuis les bords longitudinaux de la plaque de recouvrement 2 perpendiculairement à celle-ci.

Les deux parois 8 et 9 et la plaque de recouvrement 2 forment ensemble un profilé en U ce qui confère une grande rigidité à l'agrafe. Les branches du U s'étendent suivant une direction axiale A et forment l'élément d'accrochage de l'agrafe.

Comme visible sur la figure 1, chaque paroi latérale comme la paroi 8, est bordée d'un côté par le départ d'un doigt, ici le doigt 5 et de l'autre côté par l'extrémité libre de l'autre doigt, le débattement de chaque doigt étant donc ici limité par une encoche dans une paroi latérale de l'agrafe.

Les parois latérales 8,9 s'affinent en leur milieu respectivement pour former deux bras d'accrochage 10,11 cintrés chacun à l'intérieur du profilé en forme de U.

Plus particulièrement, chaque bras d'accrochage comme le bras 10 (réciproquement le bras 11) comprend une première partie de longueur de bras, ici 10A (11A), qui s'étend perpendiculairement à la plaque 2 dans le prolongement de la paroi latérale 8, une seconde partie de longueur de bras 10B (11B) qui prolonge la première partie de longueur de bras 10A et qui est cintrée à l'intérieur du profilé en U et qui vient croiser la première partie de longueur de bras 10A, et une troisième partie de longueur de bras 10C (11C) qui prolonge la seconde partie de bras 10B à l'extérieur du profilé en U pour former une face de cramponnage 12 de l'agrafe 1 qui est opposée à la face d'appui des doigts 5 et 6.

Comme visible sur la figure 1, chaque bras 10 et 11 se ramifie ici en deux branches au niveau des seconde et troisième parties de longueur de bras, les deux branches d'un bras d'accrochage croisant de part et d'autre la première partie de longueur de bras correspondante pour former sur un côté de l'agrafe deux faces de cramponnage 12.

Les deux bras 10 et 11 sont donc cintrés de façon symétrique l'un par rapport à l'autre ce qui permet une mobilité à la troisième partie de longueur des bras formant la face de cramponnage vers l'intérieur de l'agrafe.

Plus particulièrement, la ou les faces de cramponnage peuvent se rétracter élastiquement vers l'intérieur du U de l'agrafe sous l'action d'une force de poussée transversale aux parois latérales 8 et 9.

Comme visible sur la figure 1, la première partie de longueur 10A, 11A de chaque bras est bordée de chaque côté par une aile de bordure 13 qui confère à l'agrafe 1 une construction en forme de bloc très résistante aux forces élevées d'arrachement.

Dans chaque paroi latérale 10 et 11, il est prévu des premières fentes longitudinales 14 à travers lesquelles passent les extrémités libres de la troisième partie de longueur de bras 10C, 11C d'un bras d'accrochage correspondant.

Par ailleurs, dans l'exemple montré sur la figure 1, il est prévu des fentes longitudinales 15 dans laquelle vient s'encliqueter le témoin de contrôle de bon montage 4 lorsqu'il est poussé dans l'agrafe 1 en position de pré-montage. Cet encliquetage du témoin dans la fente empêche le témoin d'être dégagé facilement de l'agrafe.

Sur la figure 2, on a illustré un exemple de réalisation du témoin de contrôle de bon montage 4 qui est ici réalisé en matière plastique moulée assez rigide.

Comme visible sur la figure 2, le témoin 4 se présente comme une sorte de tige, c'est à dire avec un corps de forme générale allongée, qui s'étend suivant la direction axiale A, avec une tête 20 qui est ici déformable sous laquelle s'étendent ici transversalement deux pattes de verrouillage 21 qui sont flexibles. Le témoin a donc ici une forme générale allongée en U inversé.

Comme visible sur la figure 2, chaque patte de verrouillage 21 présente une extrémité libre en forme de sabot avec un talon 22 et une semelle 23 fendue en deux.

Le témoin de contrôle de bon montage 4 est déformable élastiquement vers l'intérieur du fait que les pattes de verrouillage 21 sont écartées l'une de l'autre transversalement à la direction axiale A et sont donc adaptées pour se rétracter ou se resserrer l'une vers l'autre élastiquement.

Comme on peut le voir sur les figures 1 et 2, l'ouverture 3 dans la plaque de recouvrement 2 a un contour qui est complémentaire du contour périphérique du témoin 4 au niveau de sa partie basse lorsque les deux pattes de verrouillage 21 sont resserrées l'une contre l'autre.

Sur la figure 3, on a illustré maintenant le témoin de contrôle de bon montage 4 enfoncé en partie dans l'agrafe 1.

Comme visible sur la figure 3, le sabot 22 de chaque patte de verrouillage est encliqueté dans la fente 15 d'une paroi latérale 10 de l'agrafe pour retenir le témoin dans l'agrafe tandis que l'extrémité libre de la semelle 23 (fendue en deux) vient buter sur une arête 16 d'un bras d'accrochage ce qui empêche le témoin de s'enfoncer axialement dans l'agrafe.

Sur la figure 4, on a illustré l'agrafe 1 et le témoin de contrôle de bon montage 4 pré-positionnés dans la pièce 7 à assembler.

La pièce 7 est ici une partie plane formant une plaque, par exemple une bande de tissu ou une plaque métallique ou en plastique faisant partie d'un sac de sécurité gonflable.

La pièce 7 est montrée ici avec une ouverture 30 de forme essentiellement rectangulaire complémentaire au contour périphérique rectangulaire de l'agrafe 1.

Par ailleurs, l'ouverture 30 est ici munie de deux encoches opposées pour laisser passer sans contact le cas échéant les sabots 22 saillant en dehors de l'agrafe à travers les fentes 15.

Cette pièce 7 est tenue entre la face d'appui de la tête de l'agrafe et les faces de cramponnage 12 des bras d'accrochage 10 et 11.

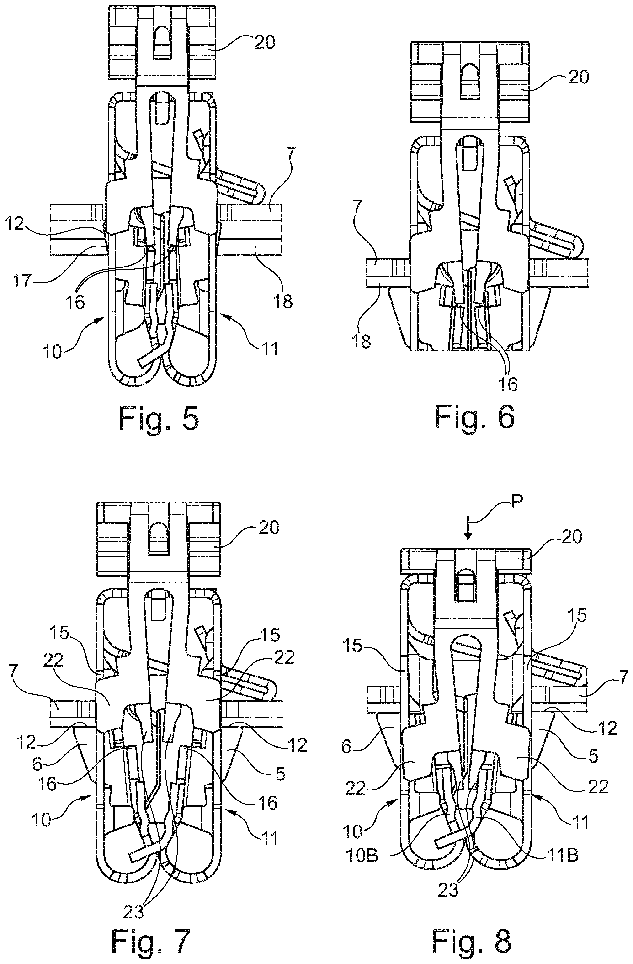

Comme visible sur la figure 5, la pièce 7 est conçue avec une épaisseur ajustée telle que la pièce 7 vient s'intercaler entre la face d'appui de la tête 1 et la face de cramponnage 12 avec un faible jeu.

Sur la figure 5, l'élément d'accrochage constitué par les bras d'accrochage 10 et 11 est maintenant enfoncé en partie dans une ouverture 17 de la partie de support 18 qui est ici un composant fixe d'un véhicule automobile, comme un volant.

L'ouverture 17 a un contour ajusté par rapport au contour périphérique de l'agrafe et ne présente pas d'encoches. Plus particulièrement, en enfonçant l'agrafe 1 dans l'ouverture 17 de la partie de support 18, le bord de l'ouverture 17 vient exercer une pression sur l'extrémité libre 10C, 11C des bras d'accrochage saillant à travers les fentes 14 hors de l'agrafe, ce qui tend à resserrer l'un vers l'autre les bras d'accrochage, c'est à dire à une rétractation des faces de cramponnage 12 vers l'intérieur de l'agrafe.

Les pattes de verrouillage 21 du témoin sont agencées de telle façon à se rétracter (à se resserrer l'une vers l'autre) élastiquement vers l'intérieur du témoin en réaction à la rétractation des faces de cramponnage 12 vers l'intérieur de l'agrafe mais en même temps elles butent sur l'arête 16 des bras d'accrochage ce qui empêche le témoin 4 de s'enfoncer axialement dans l'agrafe.

Sur la figure 6, l'élément d'accrochage de l'agrafe est maintenant complètement enfoncé dans la pièce 7 et aussi dans la partie de support 18. A noter que dans cet état d'enfoncement, le bord de l'ouverture 17 vient fermer les fentes 15 sur les parois extérieurs de l'agrafe.

Sur la figure 7, les faces de cramponnage sont revenues élastiquement dans leur position de repos, les extrémités libres 10C, 11C des bras d'accrochage saillant de nouveau à travers les fentes 14. L'élément d'accrochage est donc maintenant dans sa position de cramponnage par derrière la partie de support 18.

Les pattes de verrouillage du témoin de contrôle de bon montage butent dans les fentes 15 contre le bord de l'ouverture 17 de la partie de support mais elles ne sont plus bloquées en déplacement axial par l'arête 16 des bras d'accrochage qui s'est effacée en s'écartant vers l'extérieur de l'agrafe.

Sous l'effet de la force de poussée pour enfoncer l'agrafe dans la partie de support qui est représentée par la flèche P sur la figure 8, le témoin de contrôle de bon montage 4 peut quitter le niveau d'enfoncement dans l'agrafe qui correspond à la position de pré-montage et par conséquent peut s'enfoncer complètement dans l'agrafe, le talon 22 du sabot glissant dans la fente 15 tandis que les semelles 23 du sabot viennent se coincer entre les parties de longueur de bras 10B, 11B des bras d'accrochage.

Dans sa position d'enfoncement complet dans l'agrafe, la tête 20 du témoin de contrôle de bon montage 4 est conçue pour constituer un repère visuel ou encore tactile du bon montage de l'agrafe en position de cramponnage par derrière la partie de support 18. En particulier, on peut prévoir que la tête du témoin de contrôle de bon montage vient s'encastrer complètement dans la tête de l'agrafe de sorte à venir effleurer cette dernière ce qui constitue à la fois un repère visuel et un repère tactile.

Dans l'exemple du dispositif de fixation illustré sur les figures 2 à 8, la tête 20 du témoin 4 est déformable et est conçue pour se déformer au contact de la tête de l'agrafe, ici la plaque de recouvrement 2 quand le témoin est complètement enfoncé axialement dans l'agrafe.

La tête déformable 20 du témoin de bon montage 4 peut par exemple être conçue avec deux volets articulés 24 comme visible sur la figure 2.

Sur les figures 7 et 8, on comprend que les volets 24 de la tête du témoin 4 pivotent quand le témoin est complètement enfoncé dans l'agrafe. Vue de dessus, la tête de l'agrafe est cachée au moins en partie par les volets 24 qui sont aplatis.

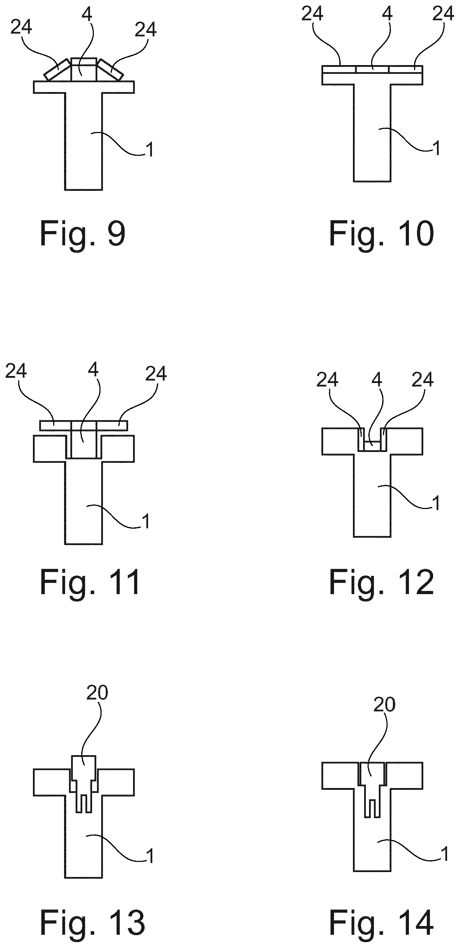

Sur les figures 9 et 10, on peut observer à partir de représentations très schématiques des volets 24, les deux états d'indication du témoin selon sa position dans l'agrafe.

En variante, on peut concevoir une tête de témoin avec des volets 24 qui se redressent quand le témoin est complètement enfoncé dans l'agrafe, c'est à dire que la tête du témoin découvre alors au moins en partie la tête de l'agrafe. Sur les figures 11 et 12, on peut observer à partir de représentations très schématiques des volets 24, encore deux états d'indication du témoin selon sa position dans l'agrafe.

Selon encore une autre variante illustrée sur les figures 13 et 14, on peut observer deux états d'indication du témoin selon sa position dans l'agrafe 1 avec une tête de témoin 20 qui est non déformable. Quand le témoin est complètement enfoncé dans l'agrafe (figure 14), la tête 20 du témoin s'efface complètement ici dans un renfoncement de la plaque de recouvrement 2 de l'agrafe 1.

Le dispositif de fixation selon l'invention contribue donc à la réalisation d'un contrôle sûr du bon montage d'un sac de sécurité gonflable et d'un composant fixe d'un véhicule automobile à l'aide d'une agrafe de fixation par cramponnage.

Le contrôle du bon montage pourrait être réalisé par un système automatique de détection par imagerie. Le contrôle du bon montage pourrait aussi être réalisé de manière tactile par un opérateur sur une chaine de montage.

Il est entendu que le dispositif de fixation selon l'invention décrit ci-dessus et montré sur les dessins n'est qu'un exemple de réalisation et que l'invention peut s'étendre à d'autres formes d'agrafe et d'autres formes de témoin de contrôle de bon montage.

## Revendications

1. Dispositif de fixation pour assembler une pièce (7) à une partie de support (18), comprenant une agrafe de fixation incluant une tête et un élément d'accrochage déformable qui s'étend sous la tête suivant une certaine direction axiale (A) et qui définit une face de cramponnage (12) espacée de la tête suivant ladite direction axiale, cet élément d'accrochage étant destiné à être poussé à travers la pièce et la partie de support de façon à réaliser l'assemblage par cramponnage de la pièce et de la partie de support entre la tête et la face de cramponnage de l'agrafe, ledit élément d'accrochage étant conçu de telle manière que ladite face de cramponnage se rétracte élastiquement vers l'intérieur de l'agrafe transversalement à ladite direction axiale quand l'élément d'accrochage est poussé à travers la pièce et la partie de support jusqu'à ce que l'agrafe soit enfoncée complètement à travers la partie de support, la face de cramponnage revenant élastiquement à l'extérieur de l'agrafe pour occuper une position de cramponnage sur la partie de support dès que l'élément d'accrochage se trouve dans ladite position d'enfoncement complet, **caractérisé en ce qu'**il comprend en outre un témoin de contrôle de bon montage (4) de l'agrafe en position de cramponnage qui se présente comme une sorte de tige destinée à être poussée axialement dans l'agrafe, **en ce que** ledit témoin et ladite agrafe sont conçus de telle manière que, quand l'élément d'accrochage est poussé à travers la partie de support, le témoin est empêché de s'enfoncer axialement dans l'agrafe par une butée (16) sur l'élément d'accrochage et en même temps le témoin est contraint à se rétracter élastiquement transversalement à ladite direction axiale vers l'intérieur de l'agrafe sous l'effet de la rétraction de la face de cramponnage vers l'intérieur de l'agrafe, l'enfoncement axial complet du témoin dans l'agrafe n'étant possible qu'au moment où la surface de cramponnage de l'élément d'accrochage revient complètement dans sa position de cramponnage par derrière la partie de support, la butée sur l'élément d'accrochage s'effaçant pour laisser passer le témoin suivant ladite direction axiale.

2. Dispositif selon la revendication 1, **caractérisé en ce que** le témoin est en matière plastique et l'agrafe est en métal.

3. Dispositif selon la revendication 1 ou 2, **caractérisé en ce que** le témoin a une tête qui est conçue pour constituer un repère visuel ou tactile quand le témoin est complètement enfoncé dans l'agrafe.

4. Dispositif selon la revendication 3, **caractérisé en ce que** le témoin a une tête déformable qui est conçue pour se déformer au contact de la tête de l'agrafe quand le témoin est complètement enfoncé dans l'agrafe.

5. Dispositif selon la revendication 4, **caractérisé en ce que** la tête déformable du témoin comprend une partie rabattable (24) agencée pour pivoter quand le témoin est complètement enfoncé dans l'agrafe.

6. Dispositif selon la revendication 5, **caractérisé en ce que** vue de dessus, la tête de l'agrafe est cachée au moins en partie par la tête déformable du témoin quand le témoin est complètement enfoncé dans l'agrafe.

7. Dispositif selon la revendication 5, **caractérisé en ce que** vue de dessus la tête déformable du témoin découvre au moins en partie la tête de l'agrafe quand le témoin est complètement enfoncé dans l'agrafe.

8. Dispositif selon l'une des revendications précédentes, **caractérisé en ce que** la tête de l'agrafe se présente sous forme d'une plaque de recouvrement (2) à partir de laquelle s'étendent perpendiculairement deux bras d'accrochage (5,6) constituant l'élément d'accrochage de l'agrafe et formant avec la plaque de recouvrement un profilé en U, chaque bras d'accrochage étant cintré à l'intérieur du profilé en U et présentant une extrémité libre formant une face de cramponnage qui saille à l'extérieur du profilé en U, **en ce que** le témoin comporte au moins deux pattes de verrouillage flexibles (21) qui s'étendent suivant la direction axiale entre lesdits bras d'accrochage, **en ce que** lesdites pattes de verrouillage sont espacées l'une de l'autre transversalement à la direction axiale et présentant chacune un talon (22) et une semelle (23), et **en ce que** le talon de chaque patte de verrouillage est conçu pour s'encliqueter dans une fente (15) s'étendant suivant la direction axiale dans l'élément d'accrochage tandis que la semelle de chaque patte de verrouillage est conçue pour venir en butée axiale contre un bras d'accrochage.

9. Dispositif selon l'une des revendications précédentes, **caractérisé en ce que** la pièce est un sac de sécurité gonflable et la partie de support est un composant fixe d'un véhicule automobile.

## Patentansprüche

1. Befestigungsvorrichtung, um ein Werkstück (7) mit einem Stützteil (18) zu verbinden, umfassend eine Befestigungsklammer, die einen Kopf und ein verformbares Befestigungselement einschließt, das sich unter dem Kopf entlang einer gewissen Axialrichtung (A) erstreckt und eine Verklammerungsfläche (12) definiert, die in der Axialrichtung vom Kopf beabstandet ist, wobei das Befestigungselement dazu bestimmt ist, durch das Werkstück und das Stützteil geschoben zu werden, um die Verbindung des Werkstücks und des Stützteils zwischen dem Kopf und der Verklammerungsfläche der Klammer durch Verklammern zu verbinden, wobei das Befestigungselement derart vorgesehen ist, dass sich die Verklammerungsfläche elastisch zum Inneren der Klammer quer zu der Axialrichtung zurückzieht, wenn das Befestigungselement durch das Werkstück und das Stützteil geschoben wird, bis die Klammer vollständig durch das Stützteil eingeschoben ist, wobei die Verklammerungsfläche wieder elastisch aus der Klammer austritt, um eine Verklammerungsposition auf dem Stützteil einzunehmen, sobald sich das Verklammerungselement in der vollständig eingeschobenen Position befindet, **dadurch gekennzeichnet, dass** sie ferner ein Anzeigeelement der richtigen Montage (4) der Klammer in der Verklammerungsposition umfasst, das als eine Art Stange vorhanden ist, das dazu bestimmt ist, axial in die Klammer geschoben zu werden, dass das Anzeigeelement und die Klammer derart vorgesehen sind, dass, wenn das Befestigungselement durch das Stützteil geschoben ist, das Anzeigeelement durch einen Anschlag (16) auf dem Befestigungselement daran gehindert wird, sich axial in die Klammer zu schieben, und gleichzeitig das Anzeigeelement dazu gezwungen wird, sich elastisch quer zu der Axialrichtung zum Inneren der Klammer unter der Wirkung des Zurückziehens der Verklammerungsfläche zum Inneren der Klammer zurückzuziehen, wobei das vollständige axiale Einschieben des Anzeigeelements in die Klammer dann möglich ist, wenn die Verklammerungsfläche des Befestigungselements vollständig in ihre Verklammerungsposition hinter dem Stützteil zurückkehrt, wobei der Anschlag auf dem Befestigungselement unwirksam wird, um das Anzeigeelement in Axialrichtung durchzulassen.

2. Vorrichtung nach Anspruch 1, **dadurch gekennzeichnet, dass** das Anzeigeelement aus Kunststoff und die Klammer aus Metall ist.

3. Vorrichtung nach Anspruch 1 oder 2, **dadurch gekennzeichnet, dass** das Anzeigeelement einen Kopf hat, der dazu vorgesehen ist, eine visuelle oder taktile Markierung darzustellen, wenn das Anzeigeelement vollständig in die Klammer eingeschoben ist.

4. Vorrichtung nach Anspruch 3, **dadurch gekennzeichnet, dass** das Anzeigeelement einen verformbaren Kopf hat, der dazu vorgesehen ist, sich bei Kontakt mit dem Kopf der Klammer zu verformen, wenn das Anzeigeelement vollständig in die Klammer eingeschoben ist.

5. Vorrichtung nach Anspruch 4, **dadurch gekennzeichnet, dass** der verformbare Kopf des Anzeigeelements einen einklappbaren Teil (24) umfasst, der dazu vorgesehen ist zu schwenken, wenn das Anzeigeelement vollständig in die Klammer eingeschoben ist.

6. Vorrichtung nach Anspruch 5, **dadurch gekennzeichnet, dass** von oben gesehen der Kopf der Klammer zumindest teilweise von dem verformbaren Kopf des Anzeigeelements verdeckt ist, wenn das Anzeigeelement vollständig in die Klammer eingeschoben ist.

7. Vorrichtung nach Anspruch 5, **dadurch gekennzeichnet, dass** von oben gesehen der verformbare Kopf des Anzeigeelements zumindest teilweise den Kopf der Klammer freilegt, wenn das Anzeigeelement vollständig in die Klammer eingeschoben ist.

8. Vorrichtung nach einem der vorhergehenden Ansprüche, **dadurch gekennzeichnet, dass** der Kopf der Klammer in Form einer Abdeckplatte (2) vorhanden ist, von der aus sich senkrecht zwei Befestigungsarme (5, 6) erstrecken, die das Befestigungselement der Klammer darstellen und mit der Abdeckplatte ein U-Profil bilden, wobei jeder Befestigungsarm im Inneren des U-Profils gebogen ist und ein freies Ende aufweist, das eine Verklammerungsfläche bildet, die aus dem U-Profil herausragt, dass das Anzeigeelement mindestens zwei flexible Verriegelungslaschen (21) umfasst, die sich in Axialrichtung zwischen den Befestigungsarmen erstrecken, dass die Verriegelungslaschen voneinander quer zur Axialrichtung beabstandet sind und jeweils eine Ferse (22) und eine Sohle (23) aufweisen, und dass die Ferse jeder Verriegelungslasche dazu vorgesehen ist, in einen Schlitz (15) einzugreifen, der sich in Axialrichtung in dem Befestigungselement erstreckt, während die Sohle jeder Verriegelungslasche dazu vorgesehen ist, an einem Befestigungsarm axial zum Anschlag zu gelangen.

9. Vorrichtung nach einem der vorhergehenden Ansprüche, **dadurch gekennzeichnet, dass** das Werkstück ein Airbag ist, und das Stützteil ein fixer Bestandteil eines Kraftfahrzeugs ist.

## Claims

1. A fastener device for assembling a part (7) to a support portion (18), said fastener device comprising a fastener clip including a head and a deformable catch element that extends under the head in a certain axial direction (A), and that defines a cramping face (12) spaced apart from the head in said axial direction, said catch element being designed to be pushed through the part and through the support portion in such a manner as to achieve assembly by cramping the part and the support portion between the head and the cramping face of the clip, said catch element being designed in such a manner that said cramping face is retracted resiliently into the clip transversely to said axial direction when the catch element is pushed through the part and through the support portion until the clip is pushed fully through the support portion, the cramping face returning resiliently to outside the clip so as to take up a cramping position for cramping to the support portion whenever the catch element is in said fully pushed-in position, said fastener device being **characterized in that** it further comprises a proper-assembly indicator (4) for checking that the clip is properly assembled in the cramping position, said proper-assembly indicator being in the form of a sort of stud designed to be pushed axially into the clip, **in that** said indicator and said clip are designed in such a manner that, when the catch element is pushed through the support portion, the indicator is prevented from penetrating axially into the clip by an abutment (16) on the catch element and, at the same time, the indicator is constrained to retract resiliently and transversely to said axial direction towards the inside of the clip under the effect of the cramping face retracting towards the inside of the clip, it being possible for the indicator to be pushed fully into the clip only when the cramping surface of the catch element comes fully into its cramping position for cramping the support portion from behind, the abutment on the catch element moving out of the way to allow the indicator to pass through in said axial direction.

2. A device according to claim 1, **characterized in that** the indicator is made of a plastics material and the clip is made of metal.

3. A device according to claim 1 or claim 2, **characterized in that** the indicator has a head that is designed to constitute a visible or tactile indication when the indicator is fully pushed into the clip.

4. A device according to claim 3, **characterized in that** the indicator has a deformable head that is designed to deform on coming into contact with the head of the clip when the indicator is fully pushed into the clip.

5. A device according to claim 4, **characterized in that** the deformable head of the indicator has a folding portion (24) arranged to pivot when the indicator is fully pushed into the clip.

6. A device according to claim 5, **characterized in that**, seen from above, the head of the clip is hidden at least in part by the deformable head of the indicator when the indicator is fully pushed into the clip.

7. A device according to claim 5, **characterized in that**, seen from above, the deformable head of the indicator uncovers the head of the clip at least in part when the indicator is fully pushed into the clip.

8. A device according to any preceding claim, **characterized in that** the head of the clip is in the form of a cover plate (2) from which two catch arms (5, 6) extend perpendicularly that constitute the catch element of the clip and that co-operate with the cover plate to form a channel-section member, each catch arm being curved towards the inside of the channel-section member and having a free end that forms a cramping face that projects outside the channel-section member, **in that** the indicator has at least two flexible locking tabs (21) that extend in the axial direction between said catch arms, **in that** said locking tabs are spaced apart from each other transversely to the axial direction and each of them has a heel (22) and a sole (23), and **in that** the heel of each locking tab is designed to snap-fasten into a slot (15) extending in the axial direction in the catch element while the sole of each locking tab is designed to come into axial abutment against a catch arm.

9. A device according to any preceding claim, **characterized in that** the part is an airbag and the support portion is a fixed component of a motor vehicle.
